# EUROPÄISCHE PATENTSCHRIFT

(11) **EP 0 754 576 B1**
(45) Veröffentlichungstag und Bekanntmachung des Hinweises auf die Patenterteilung: **10.01.2001**
(21) Anmeldenummer: 96111482.4
(22) Anmeldetag: 17.07.1996
(51) Int. Cl.: B60G 9/02

(54) **Aufhängung der lenkbaren Starrachse eines geländegängigen Fahrzeuges**
Suspension of the rigid axle of an off-road vehicle
Suspension d'un essieu directeur d'un véhicule tout-terrain

(30) Priorität: 19.07.1995 DE 19526346
(43) Veröffentlichungstag der Anmeldung: 22.01.1997
(73) Patentinhaber: Agco GmbH & Co., 87616 Marktoberdorf (DE)
(72) Erfinder: Leutner, Siegfried, 87600 Kaufbeuren (DE); Wagner, Walter, 87634 Ebersbach (DE); Schott, Herbert, 87616 Marktoberdorf (DE)

(56) Entgegenhaltungen:
- EP-A- 0 512 550
- WO-A-87/02628
- DE-A- 4 032 893
- DE-U- 1 681 012
- FR-A- 971 210
- FR-A- 1 028 238
- FR-A- 1 300 372
- FR-A- 2 570 029
- US-A- 3 524 513

## Beschreibung

Die Erfindung betrifft eine Aufhängung der lenkbaren Starrachse eines geländegängigen Fahrzeuges, insbesondere eines Ackerschleppers, mit einer am Fahrzeugrahmen angelenkten, in einer vertikalen Ebene verschwenkbaren Lenkeranordnung, von der die Starrachse über einen nach hinten weisenden Pendelbolzen in einer vertikalen Querebene verschwenkbar getragen ist.

Eine Aufhängung der beschriebenen Gattung ist durch die FI-PS 64 316 bekannt geworden. Hier besteht die Lenkeranordnung aus einem plattenförmigen Teil, das sich von der Anlenkstelle unterhalb des Fahrzeugrahmens in Fahrzeuglängsrichtung nach vorn erstreckt. Unterhalb dieser Längslenkeranordnung sind über Halterungsteile zwei mit Abstand hintereinander liegende Lagergehäuse gehalten, die der Lagerung der vorderen und hinteren Pendelbolzen der Starrachse dienen, so daß die Starrachse zwischen den Lagergehäusen in einer vertikalen Ebene pendelbar gehalten ist. Die Starrachse befindet sich dabei in einem Abstand zur Längslenkeranordnung, um ein Pendeln der Starrachse über einen ausreichend großen Pendelwinkel zu ermöglichen. Der vordere Endbereich der Längslenkeranordnung befindet sich weit vor dem vorderen Lagergehäuse und dient zur Abstützung eines Stoßdämpfers.

Als nachteilig zu verzeichnen ist bei der bekannten Achsaufhängung, daß ein oberhalb der Längslenkeranordnung befindlicher Antriebsmotor des Fahrzeuges als Folge des Platzbedarfs des Längslenkers und des Abstandes der Starrachse von dem Längslenker verhältnismäßig hoch placiert werden muß, was eine höchst unerwünschte hohe Schwerpunktslage des Fahrzeugs mit sich bringt. Außerdem besitzt die bekannte Achsaufhängung in Fahrzeuglängsrichtung einen erheblichen Platzbedarf, der eine entsprechende Länge des Fahrzeugaufbaus bedingt und die Fahrzeuglänge erhöht. Da die Anlenkpunkte der Unterlenker einer Frontanbauvorrichtung dementsprechend weiter vor der Starrachse als bei einem ungefederten Fahrzeug liegen, ergibt sich ferner eine hohe Belastung der Starrachse durch Arbeitsgeräte, die von der Frontanbauvorrichtung getragen sind.

Was die Fahrzeuglänge und die daraus resultierende Belastung der Starrachse angeht, treffen die obigen Ausführungen auch für die aus der DE 35 18 903 C2 bekannte Achsaufhängung zu, bei der die Starrachse von einer Querlenkeranordnung getragen ist.

Aus der EP 0 512 550 A2 ist eine gefederte Aufhängung einer Lenkachse gemäß dem Oberbegriff des Anspruchs 1 bekannt, bei der die Lenkachse von einer Lenkeranordnung mit einem oberhalb der Lenkachse angeordneten Pendellager mit nach hinten gerichtetem Pendelbolzen getragen ist. Im wesentlichen wird hier auf Einzelheiten der Federeinrichtung und der Lenkeranordnung als Schwingungsparallelogramm eingegangen. Dieser Druckschrift ist kein Hinweis auf Platzprobleme vor der Lenkachse oder Lösungsmöglichkeiten für die Anordnung von Pendelanschlägen für gefederte Pendelachsen zu entnehmen. Im Gegenteil wird hier eine Lenkeranordnung beschrieben, die sich vor der Lenkachse in einem Bereich befindet, in dem ein enormer Platzbedarf für die Frontzapfwelle besteht, mit der ein großer Teil derartiger Fahrzeuge ausgerüstet wird. Fahrzeuge mit der bekannten Achsaufhängung können daher mit vertretbarem Aufwand nicht mit einer Zapfwelle ausgerüstet werden. Ferner sind Pendelanschläge lediglich zum Stand der Technik in Zusammenhang mit ungefederten Starrachsen erwähnt. Wie diese bei der bekannten Achsaufhängung, bei der das Pendellager oberhalb der Lenkachse angeordnet ist, realisiert werden könnten, ohne die Pendellagerung und das Schwingungsparallelogramm durch nicht zu vermeidende Querkräfte beim Ineingriffkommen der Anschläge zu überlasten, ist nicht ersichtlich. Wegen der Anordnung des Pendellagers oberhalb der Lenkachse weist die bekannte Achsaufhängung ferner ebenso wie die oben beschriebene den Nachteil einer ungünstig hoch gelegenen Fahrzeugschwerpunktlage auf.

Durch die FR-A-971 210 ist eine Aufhängung für eine Starrachse bekannt, die mit einem nach hinten und einem nach vorn gerichteten Pendelbolzen ausgestattet ist. Die Pendelbolzen sind von einer fest mit einer Lenkeranordnung verbundenen Lagereinheit aufgenommen. Ein Teil der Lagereinheit befindet sich damit vor der Starrachse. Ferner ist dieser Druckschrift kein Hinweis auf Anschläge zum Begrenzen der Pendelbewegung der Starrachse zu entnehmen.

Die Aufgabe der Erfindung besteht darin, eine Achsaufhängung der Eingangs beschriebenen Art zu schaffen, die eine niedrige Fahrzeugschwerpunktlage begünstigt, in Fahrzeuglängsrichtung einen geringen Platzbedarf hat und eine von der Ein- und Ausfederung der Starrachse unabhängige Begrenzung der Pendelbewegung der Starrachse gestattet.

Die Lösung dieser Aufgabe besteht darin, daß die Lenkeranordnung hinter der Starrachse am Fahrzeugrahmen angelenkt ist, daß der Pendelbolzen Bestandteil der Starrachse ist und von einer fest in die Lenkeranordnung integrierten Lagereinheit aufgenommen ist, und daß im vorderen Endbereich der Längslenkeranordnung auf gegenüberliegenden Seiten der Lagereinheit zwei Anschläge für die Begrenzung der Pendelbewegung der Starrachse ausgebildet sind, die mit jeweils einem Paar Gegenanschläge an der Rückseite der Starrachse zusammenwirken, wobei einer der Gegenanschläge eines jeden Gegenanschlagpaares verstellbar ist.

Durch die Anlenkung der Lenkeranordnung am Fahrzeugrahmen hinter der Starrachse und die vorgeschlagene fliegende Lagerung der Starrachse in einer fest in die Lenkeranordnung integrierten Lagereinheit entfallen alle bisher vor der Starrachse gelegenen Bauteile. Dadurch ergibt sich für die Lenkeranordnung nicht nur eine geringe ungefederte Masse mit einer entsprechenden Verbesserung des Federungskomforts, sondern auch eine geringe Gesamtlänge, womit es möglich ist, die Anlenkpunkte der Unterlenker der Frontanbauvorrichtung näher zur Starrachse hin zu verlegen, so daß die Achsbelastung durch ein von der Frontanbauvorrichtung getragenes Arbeitsgerät gering bleibt. Das gleichzeitige Zusammenwirken der zwei Anschläge zur Begrenzung der Pendelbewegung der Starrachse im vorderen Endbereich der Längslenkeranordnung mit je einem Anschlag auf der Starrachse ermöglicht ein querkraftfreies Anschlagen der Starrachse nach Ausschöpfung des zur Verfügung stehenden Pendelwinkels. Die Beanspruchung der Lagereinheit wird dadurch im Vergleich zu Anschlaganordnungen mit nur einem wirksamen Anschlag erheblich herabgesetzt, so daß die axiale Baulänge der Lagereinheit sehr gering gehalten werden kann. Dies ist vor allem bei Fahrzeugen mit über eine Gelenkwelle angetriebener Starrachse notwendig, da hierdurch der max. Beugewinkel der Gelenkwelle klein ausfällt, was aus Gründen der Lebensdauer der Gelenkwelle erwünscht ist.

Ein Ausführungsbeispiel der Erfindung wird im folgenden anhand einer Zeichnung, die die perspektivische Ansicht einer Achsaufhängung gesehen von schräg unten wiedergibt, näher erläutert.

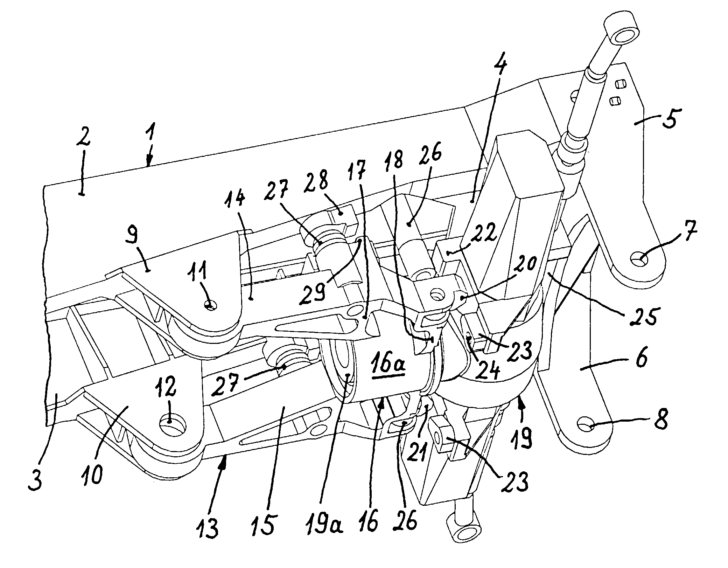

Die Zeichnung zeigt den vorderen Teil des Fahrzeugrahmens 1 eines Ackerschleppers. Der Rahmen besteht aus zwei beabstandeten Längsträgern 2, 3, die in ihrem vorderen Endbereich über eine Traverse 4 miteinander verbunden sind. An der Frontseite des Fahrzeugrahmens 1, etwa in Verlängerung der Längsträger 2, 3, sind zwei nach unten ragende Lagerböcke 5, 6 mit Lagerbohrungen 7, 8 angeschweißt, die zur Aufnahme von nicht gezeigten Lagerbolzen dienen, auf denen die beiden Unterlenker einer Frontanbauvorrichtung für Arbeitsgeräte gelagert sind.

In Abstand hinter den Lagerböcken 5, 6 sind an der Unterseite der Längsträger 2, 3 Lagerböcke 9, 10 mit horizontalen Lagerbohrungen 11, 12 angeschweißt. In die Lagerbohrungen 11, 12 sind nicht gezeigte Lagerbolzen einsteckbar, auf denen eine sich in Fahrzeuglängsrichtung nach vorn erstreckende Längslenkeranordnung 13 verschwenkbar gelagert ist. Die Längslenkeranordnung 13 besteht aus zwei im wesentlichen parallel verlaufenden Längslenkern 14, 15, die mit ihrem einen Endbereich auf den Lagerbolzen der Lagerböcke 9, 10 gelagert sind, und einer Lagereinheit 16, deren Gehäuse 16a im anderen Endbereich der Längslenker 14, 15 über Stege 17, 18 fest mit den Längslenkern 14, 15 verbunden ist.

Die Lagereinheit 16 nimmt ein in herkömmlicher Weise ausgestaltetes Gleitlager auf, in dem ein nach hinten weisender Pendelbolzen 19a der Starrachse 19 derart gelagert ist, daß die Starrachse 19 innerhalb gewisser Grenzen Pendelbewegungen in einer vertikalen Querebene ausführen kann.

Zur Begrenzung der Pendelbewegung sind am vorderen Ende der Längslenkeranordnung 13 auf gegenüberliegenden Seiten der Lagereinheit 16 zwei Anschläge 20, 21 ausgebildet, die mit jeweils einem Paar Gegenanschläge 22, 23 an der Starrachse 19 zusammenwirken. Von diesen Gegenanschlägen 22, 23 sind die oberen Teil der Starrachse, während die unteren Gegenanschläge 23 mittels je eines mit 24 angedeuteten Exzenterbolzen verstellbar sind. Auf diese Weise ist sichergestellt, daß in jeder Pendelendlage der Starrachse 19 ein Anschlag und ein Gegenanschlag miteinander in Eingriff stehen und die dabei auftretenden Stoßkräfte nicht das Gleitlager des Pendelbolzen 19a belasten, sondern von der Längslenkeranordnung 13 bzw. der Starrachse 19 aufgenommen werden.

Auf der den Gegenanschlägen 22, 23 gegenüberliegenden Seite der Starrachse 19 ist ein Lenkzylinder 25 für das Verschwenken der an den Enden der Starrachse 19 gelagerten, nicht gezeigten Fronträder des Fahrzeuges befestigt.

Zur Abfederung des Fahrzeugaufbaus sind zwischen dem Fahrzeugrahmen 1 und dem vorderen Endbereich der Längslenkeranordnung 13 zwei Federbeine 26 angeordnet.

Eine Begrenzung des Einfederweges des Fahrzeugrahmens 1 erfolgt zunächst durch zwei elastische Puffer 27 und schließlich durch feste Anschläge 28, 29 am Fahrzeugrahmen 1 und der Längslenkeranordnung 13.

## Patentansprüche

1. Aufhängung der lenkbaren Starrachse eines geländegängigen Fahrzeuges, insbesondere eines Ackerschleppers, mit einer am Fahrzeugrahmen (1) angelenkten, in einer vertikalen Ebene verschwenkbaren Lenkeranordnung (13), von der die Starrachse (19) **über einen nach hinten weisenden Pendelbolzen (19a)** in einer vertikalen Querebene pendelbar getragen ist,
**dadurch gekennzeichnet,**
**daß die Lenkeranordnung (13) hinter der Starrachse (19) am Fahrzeugrahmen (1) angelenkt ist,**
**daß der Pendelbolzen (19a) Bestandteil der Starrachse (19) ist und von einer fest in die Lenkeranordnung (13) integrierten Lagereinheit (16) aufgenommen ist, und**
daß im vorderen Endbereich der Längslenkeranordnung (13) **auf gegenüberliegenden Seiten der Lagereinheit (16)** zwei Anschläge (20, 21) für die Begrenzung der Pendelbewegung der Starrachse (19) ausgebildet sind, die mit jeweils einem Paar Gegenanschlägen (22, 23) an der Rückseite der Starrachse (19) zusammenwirken, wobei einer der Gegenanschläge (23) eines jeden Gegenanschlagpaares verstellbar ist.

## Claims

1. Suspension of the steerable rigid axle of an off-road vehicle, in particular of a farming tractor, having a steering arrangement (13), which is articulated to the vehicle chassis (1), which is pivotable in a vertical plane and by which the rigid axle (19) is carried to be able to pivot in a vertical transverse plane by means of a backwardly directed swivel pin (19a), characterised in that the steering arrangement (13) is articulated to the vehicle chassis (1) behind the rigid axle (19), in that the swivel pin (19a) is a component part of the rigid axle (19) and is received by a bearing unit (16), which is securely integrated into the steering arrangement (13), and in that, in the front end region of the longitudinal steering arrangement (13), there are formed on opposing sides of the bearing unit (16) two stops (20, 21), for limiting the swinging movement of the rigid axle (19), each of which co-operates with a respective pair of counter-stops (22, 23) on the rear of the rigid axle (19), one of the counter-stops (23) of each pair of counter-stops being adjustable.

## Revendications

1. Suspension de l'essieu rigide directeur d'un véhicule tout terrain, en particulier d'un tracteur agricole, avec un dispositif d'oscillation (13) qui peut pivoter dans un plan vertical en étant articulé sur le châssis (1) du véhicule, dispositif d'oscillation (13) qui supporte l'essieu rigide (19) au moyen d'un axe de pendule (19a) orienté vers l'arrière, et qui peut osciller dans un plan transversal vertical,
caractérisé en ce que
• le dispositif d'oscillation (13) est articulé derrière l'essieu rigide (19) sur le châssis (1) du véhicule,
• l'axe de pendule (19a) est une pièce constitutive de l'essieu rigide (19) qui est reçue par une unité de palier (16) intégrée de façon solidaire dans le dispositif d'oscillation (13), et
• dans la zone terminale avant du dispositif d'oscillation longitudinal (13) on constitue, sur des côtés opposés de l'unité de palier (16), deux butées (20, 21) pour la limitation du mouvement pendulaire de l'essieu rigide (19), butées qui coopèrent respectivement avec une paire de butées opposées (22, 23) sur le côté arrière de l'essieu rigide (19), l'une des butées opposées (23) de chacune des paires de butées opposées étant réglable.
